# EUROPÄISCHE PATENTSCHRIFT

(11) **EP 1 857 221 B1**
(45) Veröffentlichungstag und Bekanntmachung des Hinweises auf die Patenterteilung: **26.03.2014**
(21) Anmeldenummer: 07106830.8
(22) Anmeldetag: 24.04.2007
(51) Int. Cl.: B23Q 11/00, B25D 17/20

(54) **Absaugvorrichtung für ein Abbauwerkzeuggerät**
Suction device for a demolition tool
Dispositif d'aspiration pour un appareil de démolition

(30) Priorität: 08.05.2006 DE 102006000212
(43) Veröffentlichungstag der Anmeldung: 21.11.2007
(73) Patentinhaber: HILTI Aktiengesellschaft, 9494 Schaan (LI)
(72) Erfinder: Bleicher, Jochen, 86929, Penzing (DE); Ohlendorf, Oliver, 86899, Landsberg (DE)
(74) Vertreter: Wildi, Roland

(56) Entgegenhaltungen:
- EP-A- 1 486 288
- DE-A1- 3 734 127
- ES-U- 1 032 686
- FR-A- 2 383 740
- GB-A- 2 189 593

## Beschreibung

Die Erfindung betrifft eine Absaugvorrichtung für ein Abbauwerkzeuggerät nach dem Oberbegriff des Patentanspruchs 1 und wie aus der DE 37 34 127 A1 bekannt.

Die DE 37 34 127 A1 und die FR 2 383 740 A beschreiben eine Absaugvorrichtungen für eine spanende Werkzeugmaschinen. Ein Spänefangraum umgibt ein Werkzeug und weist an seiner Auflagefläche an ein Werkstück seitliche Öffnungen zum Einsaugen von Luft auf.

Die ES 1 032 686 U zeigt eine Absaugvorrichtung für eine Bohrmaschine. Um ein Bohrfutter ist eine Hülse gestülpt, in deren Aussenwandung längsverlaufende Absaugkanäle integriert sind. Die Kanäle münden in eine Absaugglocke, die an ein Werkstück angedrückt wird. Ein Bohrer ragt aus der Hülse durch eine Öffnung ebenfalls in die Absaugglocke. Von dem Bohrer erzeugtes Bohrgut wird über die Kanäle abgesaugt.

Bei der Bearbeitung eines mineralischen Untergrundes, wie beispielsweise einer Betonwand oder Betondecke, mit einem Werkzeug eines Abbauwerkzeuggerätes, wie ein Bohr-, Kombi- oder Meisselhammer, fallen Stücke von abgebauten Material sowie Staub an. Insbesondere die anfallenden Staubpartikel führen zu einer Verschmutzung der Umgebung, z. B. in Innenräumen eines Gebäudes, und behindern den Anwender bei seiner Arbeit.

In der DE 81 19 612 U wird daher eine Absaugvorrichtung für eine elektrische Handbohrmaschine vorgeschlagen, die ein erstes Ende und ein dem ersten Ende gegenüberliegend angeordnetes zweites Ende aufweist, wobei die Absaugvorrichtung einen Aufnahmeraum zum zumindest bereichsweisen Umhüllen eines Werkzeugs des Abbauwerkzeuggerätes aufweist. An dem ersten Ende der Absaugvorrichtung ist eine Festlegeeinrichtung zur Festlegung der Absaugvorrichtung an dem Abbauwerkzeuggerät vorgesehen. An dem zweiten Ende der Absaugvorrichtung weist die Absaugvorrichtung einen Anlagebereich zur Anlage der Absaugvorrichtung an einem Untergrund auf. Weiter weist die Absaugvorrichtung einen elastischen Abschnitt auf, der parallel zur Längserstreckung des Werkzeugs in seiner Längserstreckung reduzierbar ist. Zudem ist diese Absaugvorrichtung mit einer Anschlusseinrichtung für eine Vakuumquelle versehen.

Zur Bearbeitung des Untergrundes wird der Anlagebereich der Absaugvorrichtung mit dem Untergrund in Anlage gebracht und der beim Bohren anfallende Staub sowie anfallende Stücke des abgebauten Materials mittels der Vakuumquelle, z. B. in Form eines Industriestaubsaugers, abgesaugt. Der elastische Abschnitt gewährleistet die Anlage der Absaugvorrichtung am Untergrund auch bei einem fortgeschrittenen Abbauvorgang, wenn das Werkzeug in den Untergrund eingedrungen ist.

Nachteilig an der bekannten Lösung ist, dass in Abhängigkeit des von der Vakuumquelle erzeugten Saugstroms auch grössere Stücke des abgebauten Materials angesaugt werden, die einen von der Anschlusseinrichtung geschaffenen Absaugkanal sowie die Absaugleitung zur Vakuumquelle verstopfen können. Insbesondere bei Kombi- oder Meisselhämmern, die als Werkzeug z. B. einen Spitzmeissel aufweisen, fallen neben den abzuführenden Staubpartikeln auch eine Vielzahl von Stücken von abgebautem Material in verschiedenen Grössenordnungen an.

Aufgabe der Erfindung ist es, eine Absaugvorrichtung zu schaffen, die eine Staubbelastung der Umgebung während dem Bearbeiten des Untergrundes weitgehend vermeidet, wobei die Absaugleitungen nicht verstopfen.

Die Aufgabe ist durch die Merkmale des unabhängigen Anspruchs gelöst. Vorteilhafte Weiterbildungen sind in den Unteransprüchen dargelegt.

Gemäss der Erfindung ist in einem Bereich des zweiten Endes der Absaugvorrichtung zumindest ein Rückhalteelement vorgesehen, das eine Durchführöffnung für das Werkzeug sowie zumindest eine definierte Ansaugöffnung aufweist.

Die Durchführöffnung für das Werkzeug bildet eine Führung für die Absaugvorrichtung und verhindert ein Abknicken derselben trotz dem elastischen Abschnitt der Absaugvorrichtung. Je nach Ausgestaltung und Anzahl der definierten Ansaugöffnungen kann die Strömungsführung beim Ansaugen wie auch in dem Absaugraum der Absaugvorrichtung beeinflusst und somit gesteuert werden, was zu einer verbesserten Absaugung, insbesondere der anfallenden Staubpartikel, in den verschiedenen Arbeitspositionen des Abbaugerätes führt. Aufgrund der Ausgestaltung der zumindest einen definierten Ansaugöffnung wird die maximale Grösse der angesaugten Stücke von abgebauten Material begrenzt, was ein Verstopfen der Absaugkanäle verhindert. Das Rückhalteelement bildet eine Blende aus, welche das Einsaugen von grossen Stücken abgebautem Material in die Absaugvorrichtung verhindert. Das Rückhalteelement ist vorteilhaft aus einem dauerelastischen Material gefertigt.

Weist die Absaugvorrichtung einen elastischen Abschnitt auf und ist das Rückhalteelement vorteilhaft an diesem elastischen Abschnitt angeordnet, ist dieses vorteilhafterweise aus einem ähnlichen oder dem gleichen Material wie der elastische Abschnitt der Absaugvorrichtung gefertigt.

Die Festlegeeinrichtung ist vorteilhaft für eine lösbare Festlegung der Absaugvorrichtung an dem Abbauwerkzeuggerät ausgebildet und weist dazu beispielsweise ein Klemmelement auf, das eine Festlegung der Absaugvorrichtung an einem Gehäuseabschnitt oder an der Werkzeugaufnahme des Abbauwerkzeuggerätes ermöglicht.

Das Rückhalteelement weist erfindungsgemäß mehrere Segmente auf, die sich von einem äusseren Umfang der Absaugvorrichtung bis zu der Durchführöffnung für das Abbauwerkzeug erstrecken. Die Segmente sind zur Ausbildung der zumindest einen definierten Ansaugöffnung beabstandet zueinander angeordnet. Entsprechend des Einsatzes dieser Absaugvorrichtung werden die Materialdicke der Segmente sowie der Abstand der Segmente zueinander gewählt. Dieses Rückhalteelement zeichnet sich insbesondere durch seine robuste Ausgestaltung aus. Weisen die Segmente beispielsweise zur Durchführöffnung hin freie Enden auf, so können diese bei Bedarf nach innen wegschwenken beziehungsweise wieder selbstständig in ihre Ausgangsposition zurückkehren.

Erfindungsgemäß sind die Segmente zu einer von dem zweiten Ende der Absaugvorrichtung aufgespannten Ebene in einem Winkel ausgerichtet und erstrecken sich vom zweiten Ende des elastischen Abschnitts ausgehend in Richtung des ersten Endes der Absaugvorrichtung. Das mit dem Untergrund in Anlage kommende zweite Ende der Absaugvorrichtung bildet dadurch einen konkaven Vorraum aus, in dem sich für den Durchtritt durch die zumindest eine Ansaugöffnung zu grosse Stücke von abgebautem Material sammeln können.

Vorzugsweise sind die Segmente im Grundriss trapezförmig und in Richtung der Durchführöffnung verjüngend ausgebildet, wodurch sich eine vorteilhafte Strömungsführung gewährleisten lässt.

Vorzugsweise weist die zumindest eine definierte Ansaugöffnung eine minimale Querschnitterstreckung auf, die grösser als 2 mm ist, wodurch eine vorteilhafte Strömungsführung bei einem Industriestaubsauger als Vakuumquelle gegeben ist.

Bevorzugt weist die zumindest eine definierte Ansaugöffnung eine maximale Querschnitterstreckung auf, die kleiner als 30 mm ist, wodurch das Ansaugen grösserer Stücke von abgebautem Material und somit bei einer entsprechenden Ausgestaltung des Querschnitts der Absaugleitungen ein Verstopfen der Absaugleitungen verhindert wird. Wird eine Absaugleitung mit einem grösseren Querschnitt vorgesehen und eine Vakuumquelle verwendet, die eine ausreichende Saugleistung aufweist, kann die maximale Querschnitterstreckung der zumindest einen definierten Ansaugöffnung auch grösser ausgebildet werden.

Die Erfindung wird nachstehend anhand von Ausführungsbeispielen näher erläutert. Es zeigen:
- Fig.1: Eine Seitenansicht auf ein Abbauwerkzeug mit einer erfindungsgemässen Absaugvorrichtung;
- Fig. 2: eine Ansicht auf ein erstes Ausführungsbeispiel der Absaugvorrichtung gem. Linie II-II in Fig. 1;
- Fig. 3: einen Schnitt entlang der Linie III-III in Fig. 2;
- Fig. 4: eine Ansicht auf ein nicht zu der Erfindung gehörendes Ausführungsbeispiel der Staubabsaugvorrichtung gem. Fig. 2;
- Fig. 5: eine Ansicht auf nicht zu der Erfindung gehörende dritte bzw. vierte Ausführungsbeispiele der Absaugvorrichtung gem. Fig. 2;
- Fig. 6: eine Ansicht auf ein nicht zu der Erfindung gehörendes fünftes Ausführungsbeispiel der Staubabsaugvorrichtung gem. Fig. 2; und
- Fig. 7: einen Schnitt entlang der Linie VII-VII in Fig. 6.

Grundsätzlich sind in den Figuren gleiche Teile mit den gleichen Bezugszeichen versehen.

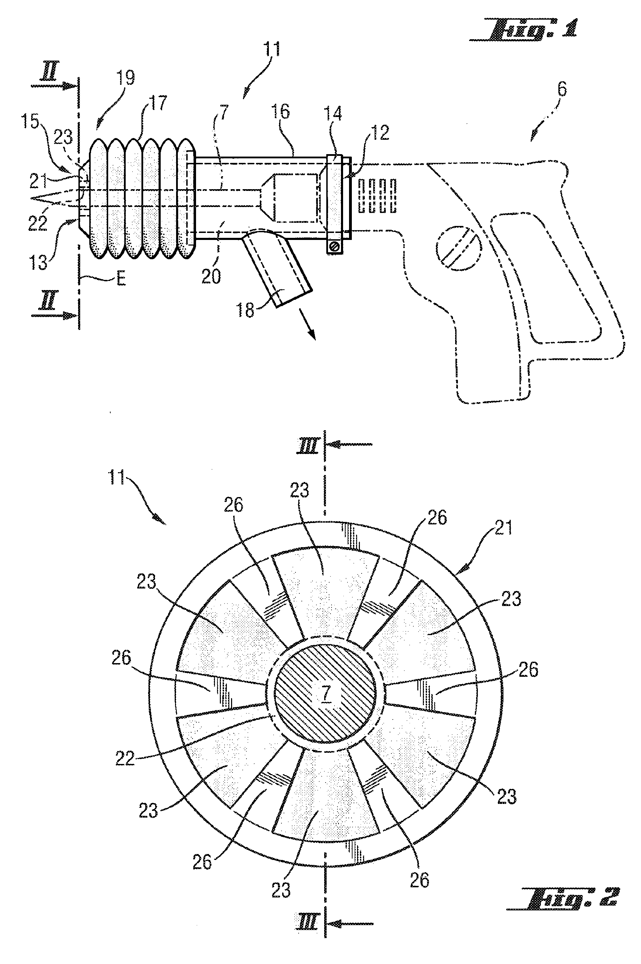

Die in den Figuren 1 bis 3 dargestellte Absaugvorrichtung 11 ist an einem Kombihammer als Abbauwerkzeuggerät 6 angeordnet. An einem ersten Ende 12 der Absaugvorrichtung 11 ist eine Festlegeeinrichtung 14 in Form einer Klemmschelle zur lösbaren Festlegung der Absaugvorrichtung 11 an dem Abbauwerkzeuggerät 6 vorgesehen. Am zweiten Ende 13 der Absaugvorrichtung 11 weist diese einen Anlagebereich 15 zur Anlage der Absaugvorrichtung 11 an einem Untergrund auf. Die Absaugvorrichtung 11 weist einen starren, sich vom ersten Ende 12 in Richtung des zweiten Endes 13 erstreckenden Abschnitt 16 und einen elastischen, sich anschliessend an den starren Abschnitt 16 bis zum zweiten Ende 13 der Absaugvorrichtung 11 hin erstreckenden Abschnitt 17 auf, der parallel zur Längserstreckung des Werkzeugs 7 in seiner Längserstreckung reduzierbar ist. Der starre Abschnitt 16 und der elastische Abschnitt 17 bilden einen Aufnahmeraum 20, der ein in dem Abbauwerkzeuggerät 6 angeordnetes Werkzeug 7 bereichsweise umhüllt. An dem starren Abschnitt 16 der Absaugvorrichtung 11 ist als Anschlusseinrichtung 18 ein Anschlussstück für eine, hier nicht dargestellten Vakuumquelle vorgesehen. In einem Bereich 19 des zweiten Endes 13 der Absaugvorrichtung 11 ist als eine Blende ein Rückhalteelement 21 vorgesehen, das eine Durchführöffnung 22 für das Werkzeug 7 sowie mehrere definierte Ansaugöffnungen 23 aufweist.

Das Rückhalteelement 21 weist mehrere Segmente 26 auf, die sich von einem äusseren Umfang der Absaugvorrichtung 11 bis zu der Durchführöffnung 22 für das Werkzeug 7 erstrecken. Die Segmente 26 sind zur Ausbildung der definierten Ansaugöffnungen 23 beabstandet zueinander angeordnet. Weiter weisen die Segmente 26 im Grundriss eine trapezförmige und in Richtung der Durchführöffnung 22 eine verjüngende Ausgestaltung auf. Die Segmente 26 sind zu einer von dem zweiten Ende 13 der Absaugvorrichtung 11 aufgespannten Ebene E in einem Winkel A ausgerichtet und erstrecken sich vom zweiten Ende 13 der Absaugvorrichtung 11 ausgehend in Richtung des ersten Endes 12 der Absaugvorrichtung.

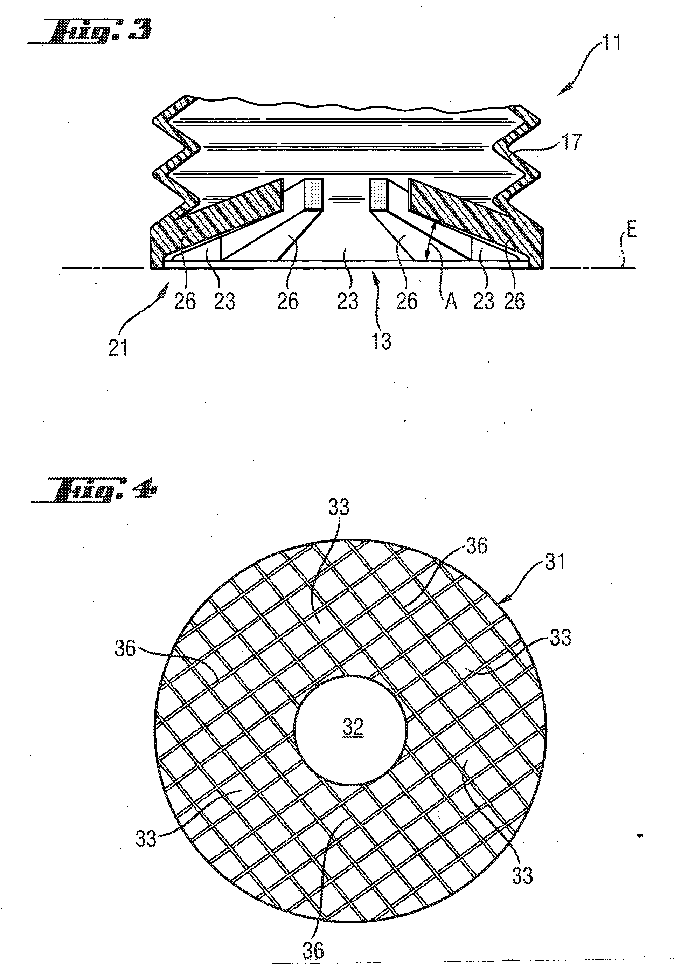

Das in Figur 4 gezeigte, beispielhafte nicht zu der Erfindung gehörende Rückhalteelement 31 ist von einem Gitterabschnitt gebildet, welcher eine Durchführöffnung 32 für das Werkzeug aufweist und dessen Vielzahl von Maschen 36 die definierten Ansaugöffnungen 33 ausbilden.

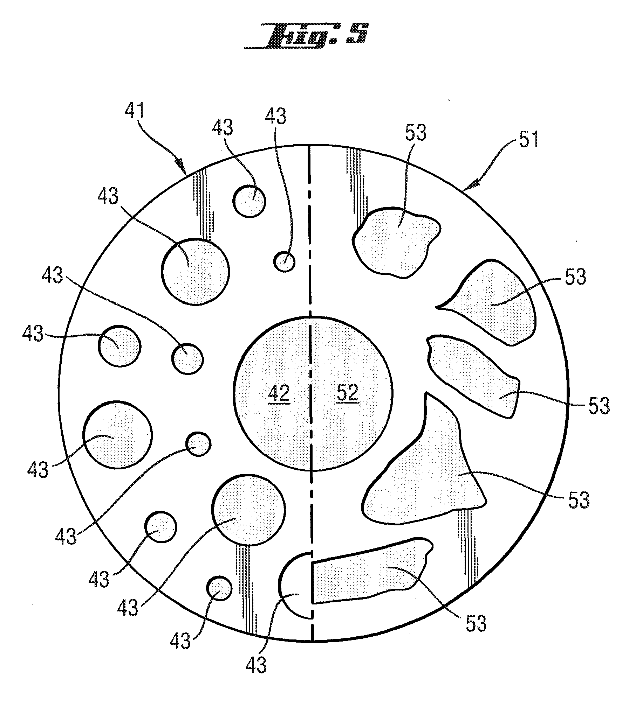

In der Figur 5 sind in einer Darstellung beispielhafte nicht zu der Erfindung gehörende Ausgestaltungen von Rückhalteelementen 41 und 51 gezeigt.

Das bezogen auf die Zeichnung links von der strichpunktierten Linie gezeigte Rückhalteelement 41 ist von einem Wandabschnitt gebildet, welcher eine Durchführöffnung 42 für das Werkzeug sowie mehrere definierte Ansaugöffnungen 43 aufweist, die jeweils einen runden Querschnitt jedoch mit unterschiedlichen Durchmessern aufweisen. Die Ansaugöffnungen 43 sind umfänglich geschlossen.

Das bezogen auf die Zeichnung rechts von der strichpunktierten Linie gezeigte Rückhalteelement 51 ist von einem Wandabschnitt gebildet, welcher eine Durchführöffnung 52 für das Werkzeug sowie mehrere Ansaugöffnungen 53 aufweist, die jeweils einen unrunden Querschnitt aufweisen und unterschiedlich ausgebildet sind. Auch die Ansaugöffnungen 53 sind jeweils umfänglich geschlossen.

Alternativ könnten auch in einem Rückhalteelement, das von einem Wandabschnitt gebildet ist, Ansaugöffnungen 43 mit rundem Querschnitt und Ansaugöffnungen 53 mit unrundem Querschnitt z. B. alternierend oder jeweils gruppiert angeordnet sein.

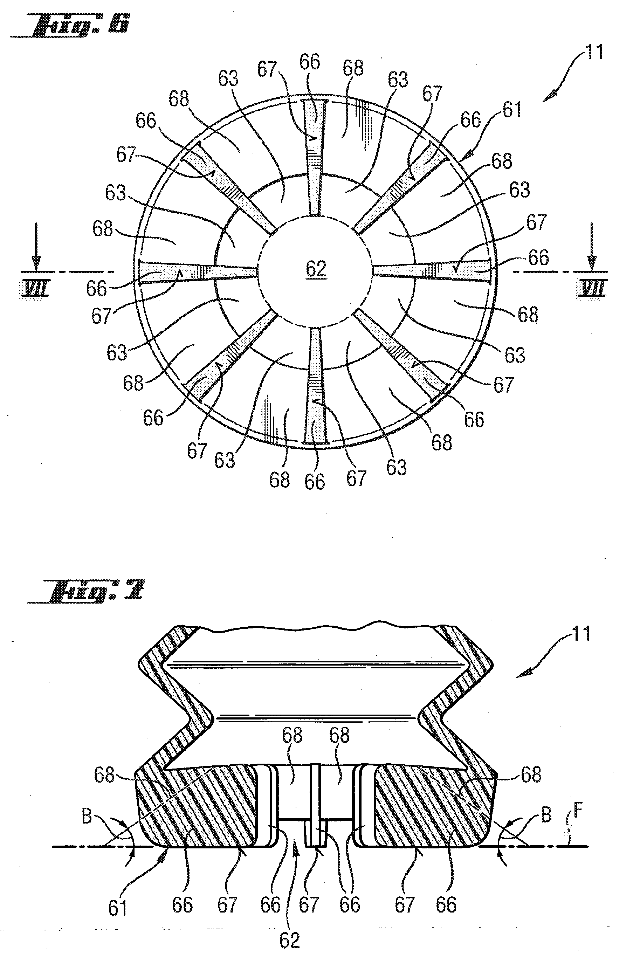

Das in den Figuren 6 und 7 gezeigte beispielhafte nicht zu der Erfindung gehörende Rückhalteelement 61 weist mehrere zueinander beabstandete Rippen 66 auf, die sich von einem äusseren Umfang der Absaugvorrichtung 11 bis zu der Durchführöffnung 62 für das Werkzeug 7 erstrecken. Die Rippen 66 jeweils eine Anlagekante 67 zur Anlage der Absaugvorrichtung 11 an dem Untergrund auf, wobei die Anlagekanten 67 in einer Ebene F liegen. Zwischen den Rippen 66 sind Wandabschnitte 68 vorgesehen, die die sich von einem äusseren Umfang der Absaugvorrichtung 11 in Richtung der Durchführöffnung 62 für das Werkzeug 7 erstrecken. Deren freies Ende ist zur Schaffung der Ansaugöffnungen 63 beabstandet zur Durchführöffnung 62 angeordnet. Weiter sind die Wandabschnitte 68 in einem Winkel B zu der von den Anlagekanten 67 aufgespannten Ebene F angeordnet.

Sämtliche Ansaugöffnungen 23, 33, 43, 53, 63 weisen eine minimale Querschnitterstreckung, die grösser als 2 mm ist, und eine maximale Querschnitterstreckung auf, die kleiner als 30 mm ist.

## Patentansprüche

1. Absaugvorrichtung für ein Abbauwerkzeuggerät (6) mit einem ersten Ende (12) und einem dem ersten Ende (12) gegenüberliegend angeordneten zweiten Ende (13), wobei die Absaugvorrichtung (11) einen Aufnahmeraum (20) zum zumindest bereichsweisen Umhüllen eines Werkzeugs (7) des Abbauwerkzeuggerätes (6) aufweist,
mit einer Festlegeeinrichtung (14) am ersten Ende (12) der Absaugvorrichtung (11) zur Festlegung der Absaugvorrichtung (11) an dem Abbauwerkzeuggerät (6),
mit einem Anlagebereich (15) am zweiten Ende (13) der Absaugvorrichtung (11) zur Anlage der Absaugvorrichtung (11) an einen Untergrund,
mit einer Anschlusseinrichtung (18) für eine Vakuumquelle,
wobei in einem Bereich (19) des zweiten Endes (13) der Absaugvorrichtung (11) zumindest ein Rückhalteelement (21; 31; 41; 51) vorgesehen ist, das eine Durchführöffnung (22; 32; 42; 52) für das Werkzeug (7) sowie zumindest eine definierte Ansaugöffnung (23; 33; 43; 53) aufweist,
wobei das Rückhalteelement (21) mehrere Segmente (26) aufweist, die sich von einem äusseren Umfang der Absaugvorrichtung (11) bis zu der Durchführöffnung (22) für das Werkzeug (7) erstrecken, wobei die Segmente (26) zur Ausbildung der zumindest einen definierten Ansaugöffnung (23) beabstandet zueinander angeordnet sind,
**dadurch gekennzeichnet, dass**
die Segmente (26) zu einer von dem zweiten Ende (13) der Absaugvorrichtung (11) aufgespannten Ebene (E) in einem Winkel (A) ausgerichtet sind und sich vom zweiten Ende (13) der Absaugvorrichtung (11) ausgehend in Richtung des ersten Endes (12) der Absaugvorrichtung (11) erstrecken,
wobei das Rückhalteelement (21) zum Begrenzen einer Grösse durch die Ansaugöffnungen (23) in den Aufnahmeraum (20) angesaugter Partikel vorgesehen ist.

2. Absaugvorrichtung nach Anspruch 1, **dadurch gekennzeichnet, dass** die Segmente (26) im Grundriss eine trapezförmige und in Richtung der Durchführöffnung (22) eine verjüngende Ausgestaltung aufweisen.

3. Absaugvorrichtung nach einem der Ansprüche 1 oder 2, **dadurch gekennzeichnet, dass** die zumindest eine Ansaugöffnung (23) eine minimale Querschnitterstreckung aufweist, die grösser als 2 mm ist.

4. Absaugvorrichtung nach einem der Ansprüche 1 bis 3, **dadurch gekennzeichnet, dass** die zumindest eine Ansaugöffnung (23) eine maximale Querschnitterstreckung aufweist, die kleiner als 30 mm ist.

## Claims

1. Suction device for a demolition power tool (6), having a first end (12) and a second end (13) arranged opposite the first end (12), the suction device (11) having a receiving chamber (20) for at least partially enclosing a tool bit (7) of the demolition power tool (6), and comprising
a securing device (14) at the first end (12) of the suction device (11) for securing the suction device (11) to the demolition power tool (6),
a contact area (15) at the second end (13) of the suction device (11) for bringing the suction device (11) into contact with a substrate,
a connection device (18) for a vacuum source,
there being provided in a region (19) of the second end (13) of the suction device (11) at least one retaining element (21; 31; 41; 51) which has a through-opening (22; 32; 42; 52) for the tool bit (7) and at least one defined intake opening (23; 33; 43; 53),
the retaining element (21) having a plurality of segments (26) which extend from an outer circumference of the suction device (11) to the through-opening (22) for the tool bit (7), the segments (26) being arranged at a distance from one another to form the at least one defined intake opening (23),
**characterised in that**
the segments (26) are aligned at an angle (A) to a plane (E) extending from the second end (13) of the suction device (11) and are oriented in the direction of the first end (12) of the suction device (11), starting from the second end (13) of the suction device (11),
the retaining element (21) being provided in order to limit a size of particles sucked into the receiving chamber (20) through the intake openings (23).

2. Suction device according to Claim 1, **characterised in that** the segments (26) have a trapezoidal shape in plan view and taper inwards in the direction of the through-opening (22).

3. Suction device according to either of Claims 1 and 2, **characterised in that** the at least one intake opening (23) has a minimum cross-sectional extent which is greater than 2 mm.

4. Suction device according to any one of Claims 1 to 3, **characterised in that** the at least one intake opening (23) has a maximum cross-sectional extent which is less than 30 mm.

## Revendications

1. Dispositif d'aspiration pour un outil de démolition (6) ayant une première extrémité (12) et une seconde extrémité (13) agencée à l'opposé de la première extrémité (12), le dispositif d'aspiration (11) comportant un espace de réception (20) destine à entourer, au moins dans certaines zones, un outil (7) de l'outil de démolition (6),
un dispositif de blocage (14) sur la première extrémité (12) du dispositif d'aspiration (11) afin de bloquer le dispositif d'aspiration (11) sur l'outil de démolition (6),
une zone de contact (15) sur la seconde extrémité (13) du dispositif d'aspiration (11) afin de mettre le dispositif d'aspiration (11) en contact avec une surface sous-jacente,
un dispositif de raccordement (18) pour une source de vide,
dans lequel au moins un élément de retenue (21 ; 31 ; 41 ; 51) comportant une ouverture traversante (22 ; 32 ; 42 ; 52) pour l'outil (7) est prévu dans une zone (19) de la seconde extrémité (13) du dispositif d'aspiration (11), ainsi qu'au moins une ouverture d'aspiration définie (23 ; 33 ; 43 ; 53),
dans lequel l'élément de retenue (21) comporte plusieurs segments (26) qui s'étendent à partir d'une circonférence extérieure du dispositif d'aspiration (11) jusqu'à l'ouverture traversante (22) pour l'outil (7), dans lequel les segments (26) sont agencés espacés les uns des autres de manière à former ladite au moins une ouverture d'aspiration définie (23),
**caractérisé en ce que**
les segments (26) sont orientés à une angle (A) par rapport à un plan (E) défini par la seconde extrémité (13) du dispositif d'aspiration (11) et s'étendent à partir de la seconde extrémité (13) du dispositif d'aspiration (11) en direction de la première extrémité (12) du dispositif d'aspiration (11),
dans lequel l'élément de retenue (21) est destiné à limiter une taille de particules aspirées à travers les ouvertures d'aspiration (23) dans l'espace de réception (20).

2. Dispositif d'aspiration selon la revendication 1, **caractérisé en ce que** les segments (26) présentent, lorsque vus en projection horizontale, un contour trapézoïdal et qui diminue en direction de l'ouverture traversante (22).

3. Dispositif d'aspiration selon l'une des revendications 1 ou 2, **caractérisé en ce que** ladite au moins une ouverture d'aspiration (23) a une extension de section transversale minimale qui est supérieure à 2 mm.

4. Dispositif d'aspiration selon l'une des revendications 1 à 3, **caractérisé en ce que** ladite au moins une ouverture d'aspiration (23) a une extension de section transversale maximale qui est inférieure à 30 mm.
